# EUROPEAN PATENT APPLICATION

(11) **EP 4 050 205 A1**
(43) Date of publication of application: **31.08.2022**
(21) Application number: 21159148.2
(22) Date of filing: 25.02.2021
(51) Int. Cl.: F03D 7/02

(54) **ROTOR BLADE WITH CONTROLLABLE AERODYNAMIC DEVICE FOR A WIND TURBINE**

(71) Applicant: Siemens Gamesa Renewable Energy A/S, 7330 Brande (DK)
(72) Inventor: Wind-Larsen, Taus, 8000 Aarhus C (DK)
(74) Representative: Aspacher, Karl-Georg

(57) **Abstract**

Disclosed is a rotor blade (20) for a wind turbine (10), wherein the rotor blade (20) has: an aerodynamic device (29) arranged at a suction side (25) of the rotor blade (20) between a leading edge section (23) of the rotor blade (20) and a trailing edge section (24) of the rotor blade (20); wherein the aerodynamic device (29) has a bending actuator (40, 60), which comprises an electroactive polymer, EAP, film (43, 63), which is sandwiched between a first electrode layer (41, 61) and a second electrode layer (42, 62). The bending actuator (40, 60) is configured to assume a first bended shape that is between a first shape (46, 66) and a second shape (47, 67) of the bending actuator (40, 60) when an electrical voltage difference (49, 69) is applied to the first and the second electrode layers (41, 42; 61, 62). The second shape (47, 67) involves a stronger bending of the bending actuator (40, 60) and an according stronger influence of an airflow (28) flowing from the leading edge section (23) of the rotor blade (20) to the trailing edge section (24) of the rotor blade (20), while the first shape (46, 66) involves a weaker or substantially no bending of the bending actuator (40, 60) and an according weaker or substantially no influence of the airflow (28).

## Description

### Technical area

The present disclosure relates generally to a rotor blade for a wind turbine. In particular, the present disclosure relates to rotor blade for a wind turbine having a controllable aerodynamic device, a method for operating a wind turbine comprising a rotor blade having a controllable aerodynamic device, and a wind turbine comprising such a rotor blade or being operated according the method.

### Background art

It is known to provide rotor blades for a wind turbine with an aerodynamic device for influencing the airflow, which flows from a leading edge section to a trailing edge section of the rotor blade. Examples of such an aerodynamic device comprise a flap or blade flap arranged at the trailing edge section of the rotor blade as disclosed for example in WO 2010/151230 A1, and a spoiler arranged at a surface of the rotor blade between the leading edge section and the trailing edge section namely at a suction side of the rotor blade as disclosed for example in WO 2018/041420 A1 and in WO 2020/120330 A1. These aerodynamic devices are configured such that their shape and/or orientation can be regulated, e.g. by a suitable actuator.

WO 2010/151230 A1 discloses an actuatable blade flap arranged in the trailing edge section of a rotor blade of a wind turbine, and an actuator system for actuating the blade flap. The actuator system includes a first lever having a first arm pivotable about a first pivot axis, and a second arm extending away from the first arm. The second arm is fixed to the first arm at a position spaced away from the first pivot axis. The actuator system also includes an actuator element slidably coupled to the second arm via a coupling element. Upon activation of the actuator element, the actuator element is adapted to push the coupling element towards to or pull the coupling element away from the second arm such that the coupling element applies pressure on the second arm and performs a sliding movement along the second arm. The actuator element can comprise a piezoelectric stack, electrorestrictive materials, dielectric electroactive polymers, piezopoly-mers, shape memory alloys, and pneumatics.

WO 2018/041420 A1 discloses a flow control arrangement for a rotor blade of a wind turbine. A rotor blade comprises a controllable or adaptable aerodynamic device for influencing the airflow flowing from the leading edge section of the rotor blade to the trailing edge section of the rotor blade. The aerodynamic device is mounted at a surface of the rotor blade and comprises a pneumatic or hydraulic actuator, such as a hose or a cavity, of which the volume depends on the pressure of a fluid being present inside the pneumatic or hydraulic actuator. The rotor blade further comprises a control unit for controlling the pressure of the fluid in the hose or the cavity of the aerodynamic device. The aerodynamic device is in a first configuration when no pressure application to the fluid in the pneumatic or hydraulic actuator is induced by the control unit, and is in a second configuration when the control unit induces the application of a positive or negative pressure to the fluid in the pneumatic or hydraulic actuator. The rotor blade is furthermore characterized in that its lift in the first configuration is smaller than the lift of the rotor blade in the second configuration.

WO 2020/120330 A1 discloses an adaptable aerodynamic device or spoiler for a rotor blade of a wind turbine. The aerodynamic device comprises a main body comprising an airfoil shaped surface to be exposed to air flow; at least one stiffening element distinct from the main body and supporting the airfoil surface, wherein the stiffening element is in particular configured to enforce the shape of the airfoil surface during loading by wind during operation of the wind turbine.

The adaptable aerodynamic device or spoiler of both WO 2018/041420 A1 and WO 2020/120330 A1 is used to alter the lift of the rotor blade by influencing the airflow flowing from the leading edge section to the trailing edge section of the rotor blade. The aerodynamic device or spoiler may also create flow separation and provoke a stall effect to reduce the aerodynamic load (or lift) of the rotor blade without pitching the rotor blade, i.e. changing the angle of attack of the airflow on the rotor blade.

### Summary of the disclosure

The present disclosure generally aims at providing an adjustable aerodynamic device or spoiler, which is to be arranged on the suction side of the wind turbine rotor blade between the leading edge section and the trailing edge section of the rotor blade, for changing an aerodynamic load (or lift) of a rotor blade of a wind turbine without pitching the rotor blade. The present disclosure does not relate to a flap to be arranged at the trailing edge section of the rotor blade. Such an adjustable aerodynamic device or spoiler provides in particular the possibility of changing the aerodynamic load of a rotor blade for various control purposes.

It is an object of the present disclosure to provide a rotor blade of a wind turbine that is capable to change the aerodynamic load (or lift) of the rotor blade without pitching the rotor blade, and to provide this possibility for various control purposes, while reducing complexity, weight and/or cost of an existing aerodynamic device for a rotor blade.

This object is solved in particular by the subjects having the features according to the independent patent claims. Further embodiment examples are shown in the dependent claims. According to a first embodiment example of the present disclosure, there is provided a rotor blade of a wind turbine, wherein the rotor blade has: a controllable aerodynamic device arranged at a suction side of the rotor blade between a leading edge section of the rotor blade and a trailing edge section of the rotor blade. The aerodynamic device has a bending actuator, which comprises an electroactive polymer, EAP, film, which is sandwiched between a first electrode layer and a second electrode layer. The bending actuator is configured to assume a first bended shape that is between a first shape and a second shape of the bending actuator when an electrical voltage difference is applied to the first and the second electrode layers. The second shape involves a strongest bending of the bending actuator and an according strongest influence of an airflow flowing from the leading edge section of the rotor blade to the trailing edge section of the rotor blade and wherein the first shape involves a weakest or substantially no bending of the bending actuator and an according weakest or substantially no influence of the airflow.

There exist many different terms for aerodynamic devices which are destined to selectively change, i.e. increase or decrease, the lift of the rotor blade by some sort of change in configuration or orientation. They are, for instance, denoted as spoilers, flaps or - more generic - as lift enhancing means. In the present disclosure, the term "aerodynamic device" refers to all those devices which are able - upon activation by a suitable actuator - to influence the airflow flowing from the leading edge section of the rotor blade to the trailing edge section of the rotor blade. Usually, this impact on the airflow is accompanied by a change in the local lift coefficient and, consequently, also in the value of the overall lift of the rotor blade.

The term electroactive polymer (EAP) refers to a polymer, which exhibits a change in size or shape when it is stimulated, or activated, by an electric field, which may be provided by an electrical voltage supply system. The most commonly known applications of this type of material (EAP) is in actuators, as employed in the present dislosure, and in sensors. A typical characteristic property of an EAP is that it will undergo a large amount of deformation while sustaining large forces. EAPs are generally divided in two principle classes: dielectric EAPs and ionic EAPs. Dielectric EAPs are polymer materials, in which the actuation is caused by electrostatic forces between two electrodes, which generate an electric field and accordingly squeeze the polymer in the direction of the electric field, wherein as a consequence of the squeezing in the direction of the electric field and the substantial incompressibility of the material also an expansion in directions perpendicular to the direction of the electric field is caused. In ionic EAPs, the actuation by an external electric field causes a displacement of ions inside a polymer film material, typically the ions gather at a main surface where the oppositely charged electrode, for example the cathode in the case of electropositive ions, is arranged, which causes the polymer to bend and accordingly to bendingly deform said main surface.

In both classes, i.e. dielectric and ionic, EAPs together with electrode layers applied thereon for applying the electric field can have a variety of different mechanical and structural configurations.

In a simple configuration of a dielectric EAP, which is not used in the present disclosure, a film of EAP material can be sandwiched between a pair of electrode layers. The squeezing deformation that is caused in result of the application of an electric field in the direction of the electric field can be used to create a linear actuator, which decreases its dimension in the electric field direction when the electric field strength is increased. Also, the expansion in directions perpendicular to the direction of the electric field can be used to create a linear actuator, which increases its dimension in the directions perpendicular to electric field when the electric field strength is increased.

In a modified configuration of a dielectric EAP, which is used in the present disclosure, the afore-mentioned simple configuration of an EAP film sandwiched between a pair of electrode layers, an electrically inactive but mechanical stiff - in particular stiffer than the simple configuration - layer is two-dimensionally connected to the simple configuration, in particular on one of the electrode layers. In this modified configuration, when the EAP film together with the electrode layers applied thereon on opposite main surface performs in addition to a squeezing in the electric field direction an expansion in directions perpendicular to the field, i.e. in a plane of the EAP film, such mechanical stiff layer - because it does not perform the in-plane expansion - may cause the whole configuration to bend. This bending effect can be used to create a bending actuator.

In a simple configuration of an ionic EAP, which is also used in the present disclosure, the bending deformation of the main surface, along which the ions gather as described above, can be used to create a bending actuator.

By providing a bending actuator configured to assume a bended shape that is between a first minimum bended shape and a second maximum bended shape, the bending actuator itself may be device that is exposed to the airflow and that influences the airflow. In this way, it is not required to provide an additional element, which is actuatable by the actuator and which is exposed to the airflow and influences the airflow. Accordingly, the weight and complexity, and possibly also the cost, of the spoiler-type aerodynamic device can be reduced with respect to known spoiler-type aerodynamic devices.

In an exemplary embodiment of the first embodiment example, the bending actuator may be configured to vary its shape, in particular continuously, from the first bended shape so as to assume a second bended shape between the first shape and the second shape in response to varying the electrical voltage difference applied to the first and the second electrode layers.

In an exemplary embodiment of the first embodiment example, the bending actuator may have a leading edge that may be closer to the leading edge section of the rotor blade and a trailing edge that may be further away from the leading edge section of the rotor blade than the leading edge of the actuator. The leading edge may be substantially fixedly arranged with respect to an outer surface of the rotor blade, and the trailing edge may be movable and may increase its lifting off with respect to the outer surface of the rotor blade when the bending of the actuator increases.

In an exemplary embodiment of the first embodiment example, the bending actuator may have an upper surface that may be exposed to the airflow, which upper surface may become more concave when the bending becomes stronger.

In a particular exemplary embodiment of the first embodiment example, the EAP film of the bending actuator may be an ionic electroactive polymer, IEAP, film that may be configured to change a bending deformation when an electrical voltage difference applied to the first and the second electrode layers is varied.

In a first further implementation of the particular exemplary embodiment, the bending may increase when the applied electrical voltage difference increases. In an alternative, second further implementation thereof, the bending may decrease when the applied electrical voltage difference increases.

In an alternative particular exemplary embodiment of the first embodiment example, the EAP film may be a dielectric electroactive polymer, DEAP, film, in particular a dielectric elastomer, DE, film, that may be sandwiched between a first electrode layer and a second electrode layer.

In a first further implementation of the alternative particular exemplary embodiment, the bending actuator may further comprise an upper layer arranged at a side that may be exposed to the airflow, wherein the upper layer may be made of a material that is electrically inactive, elastic, stiffer than the DEAP material, in particular the DE material, of the film, and mechanically substantially flat and without bending stress when the upper layer is connected to the first electrode layer or the second electrode layer, which layers are substantially mechanically flat and without bending stress when no electrical voltage difference is applied to the first and second electrode layers. In this implementation, in particular, the bending may increase when the applied electrical voltage difference increases, and may decrease when the applied electrical voltage difference decreases.

In a second further implementation of the alternative particular exemplary embodiment, the bending actuator further comprises an upper layer arranged at a side that is exposed to the airflow, wherein the upper layer is made of a material that is electrically inactive, elastic, stiffer than the DEAP material, in particular the DE material, of the film, and mechanically pre-bend and without bending stress when the upper layer is connected to the first electrode layer or the second electrode layer. Herein, the film and the first and second electrode layers are mechanically bent according to the pre-bending of the upper layer and without bending stress when no electrical voltage difference is applied to the first and second electrode layers. In this implementation, in particular, the bending may decrease when the applied electrical voltage difference increases, and may increase when the applied electrical voltage difference decreases

In an exemplary embodiment of the first embodiment example, the rotor blade may extend longitudinally along a rotor blade length axis from a root of the rotor blade to a tip of the rotor blade, wherein the aerodynamic device may extend longitudinally in an extension direction, which may be substantially parallel to, or at an acute angle with, the rotor blade length axis, and wherein the bending rather may be substantially most pronounced in a plane perpendicular to the extension direction. In an implementation thereof, the bending may be substantially not in a plane comprising the extension direction.

In a first further development of the afore-mentioned exemplary embodiment, the aerodynamic device may be subdivided in the extension direction in a plurality of sectional bending actuators, which are mutually neighbouring each other. Herein, each sectional bending actuator may comprise a sectional EAP film that may be sandwiched between a first sectional electrode layer and a second sectional electrode layer. In a further implementation thereof, each sectional bending actuator may be operable autonomously.

In an alternative second further development of the afore-mentioned exemplary embodiment, the aerodynamic device may have a continuous upper layer that may extend continuously in the extension direction, and a plurality of partial bending actuators that may be distributed along the extension direction and may be mutually spaced at a distance from each other in the extension direction. Herein, each partial bending actuator may be two-dimensionally fixed to partial portion of an underside of the upper layer, and each partial bending actuator may comprises a partial EAP film that may be sandwiched between a first partial electrode layer and a second partial electrode layer. In a further implementation thereof, each partial bending actuator may be operable autonomously.

In a first further development of the afore-mentioned first and second further developments, the plurality of mutually adjoining sectional bending actuators according to the first further development or the plurality of mutually spaced partial bending actuators the second further development are electrically, that is in particular in respect of the application of the voltage difference to the first and second sectional electrode layers according to the first further development or to the first and second partial electrode layers according to the second further development, operatable parallel to each other.

In an alternative second further development of the afore-mentioned first and second further developments, the plurality of mutually adjoining sectional bending actuators according to the first further development or the plurality of mutually spaced partial bending actuators according to the second further development are electrically, that is in particular in respect of the application of the voltage difference to the first and second sectional electrode layers according to the first further development or to the first and second partial electrode layers according to the second further development, operatable serially with each other.

In an exemplary embodiment of the first embodiment example, the aerodynamic device may comprise an electrical voltage supply device configured to provide an electrical voltage that may be used to provide the electrical voltage difference applied to the first and the second electrode layers, in particular to the first and the second sectional electrode layers according to the first further development or to the first and the second partial electrode layers according to the second further development.

In a first further development of the afore-mentioned exemplary embodiment, in the aerodynamic device, the electrical voltage supply device may be arranged within the rotor blade, in particular in a root section of the rotor blade. In an alternative second further development of the afore-mentioned exemplary embodiment, the electrical voltage supply device may be arranged outside of the rotor blade and elsewhere within the wind turbine, for example in a rotor hub of the wind turbine or in a nacelle of the wind turbine.

In an exemplary embodiment of the first embodiment example, the aerodynamic device may be arranged on an outer surface at the suction side of the rotor blade.

In a further development of the afore-mentioned exemplary embodiment, the aerodynamic device may comprise a first transition element, which i) may be arranged upstream of the bending actuator with respect to the airflow direction, in particular at a side of the aerodynamic device that faces in a direction towards the leading edge section of the rotor blade, ii) may extend along a length of the aerodynamic device in the extension direction of the aerodynamic device, and iii) may taper from a thickness of the bending actuator in a direction towards the leading edge section of the rotor blade and/or perpendicular to the extension direction away from the bending actuator. Moreover, the aerodynamic device may comprise a second transition element, which i) may be arranged downstream of the bending actuator with respect to the airflow direction, in particular at a side of the aerodynamic device that faces in a direction towards the trailing edge section of the rotor blade, ii) may extend along a length of the aerodynamic device in the extension direction of the aerodynamic device, and iii) may taper from a thickness of the bending actuator in a direction towards the trailing edge section of the rotor blade and/or perpendicular to the extension direction away from the bending actuator. In a further implementation thereof, when the bending actuator of the aerodynamic device assumes the first shape, an outer surface of the bending actuator may be substantially flush with an outer surface of the first transition element and flush with an outer surface of the second transition element.

In a first still further development of the afore-mentioned exemplary embodiment, the first and the second transition elements may each be two-dimensionally fixed to the outer surface of the rotor blade.

In an alternative or additional second still further development of the afore-mentioned exemplary embodiment, the first transition element and the second transition element may be connected to each other via a floor element, which may be arrangeable under the bending actuator. Herein in particular, the first transition element, the second transition element, and the floor element may together form a profile device, which may be provided to the aerodynamic device in a pre-fabricated state.

In an alternative further development of the afore-mentioned exemplary embodiment, the aerodynamic device may be arranged in a groove, which may be formed in an outer surface at the suction side of the rotor blade and which may extend longitudinally substantially parallel to or at an acute angle to a rotor blade length axis. In an implementation thereof, when the bending actuator of the aerodynamic device assumes the first shape, an outer surface of the bending actuator may be substantially flush with the outer surface of the rotor blade.

According to a second embodiment example of the present disclosure, there is provided a method of operating a wind turbine, wherein the wind turbine comprises a rotor blade having a controllable aerodynamic device arranged at a suction side of the rotor blade between a leading edge section of the rotor blade and a trailing edge section of the rotor blade, wherein the aerodynamic device has a bending actuator, which comprises an electroactive polymer, EAP, film, which is sandwiched between a first electrode layer and a second electrode layer. The method has the following step: applying an electrical voltage difference to the first and the second electrode layers so that the bending actuator assumes a first bended shape between a first shape and a second shape of the bending actuator, wherein the second shape involves a stronger bending of the bending actuator and an according stronger influence of an airflow flowing from a leading edge section of the rotor blade to a trailing edge section of the rotor blade, and wherein the first shape involves a weaker or substantially no bending of the bending actuator and an according weaker or substantially no influence of the air flow.

In an exemplary embodiment of the second embodiment example, the method may further have varying the electrical voltage difference applied to the first and the second electrode layers, so that the shape of the bending actuator changes its shape, in particular continuously, from the first bended shape so as to assume a second bended shape between the first shape and the second shape.

In an exemplary embodiment of the second embodiment example, the EAP film of the bending actuator is an ionic electroactive polymer, IEAP, film that is configured to create a bending deformation when the electrical voltage difference is applied to the first and the second electrode layers. In a first further implementation of this exemplary embodiment, the bending may increase when the applied electrical voltage difference increases. In an alternative second further implementation of this exemplary embodiment, the bending may decrease when the applied electrical voltage difference increases.

In an exemplary embodiment of the second embodiment example, the EAP film may be a dielectric electroactive polymer, DEAP, film, in particular a dielectric elastomer, DE, film, that is sandwiched between a first electrode layer and a second electrode layer.

In a first further implementation of the afore-mentioned exemplary embodiment, the bending actuator may further comprise an upper layer arranged at a side that is exposed to the airflow, wherein the upper layer may be made of a material that is electrically inactive, elastic, stiffer than the DEAP material, in particular the DE material, of the film, and mechanically substantially flat and without bending stress when the upper layer is connected to the first electrode layer or the second electrode layer, which layer is substantially mechanically flat and without bending stress. Herein, in particular, the bending may increase when the applied electrical voltage difference increases, and may decreases when the applied electrical voltage difference decreases.

In an alternative second further implementation of the afore-mentioned exemplary embodiment, the bending actuator may further comprise an upper layer arranged at a side that is exposed to the airflow, wherein the upper layer is made of a material that is electrically inactive, elastic, stiffer than the DEAP material, in particular the DE material, of the film, and mechanically pre-bend and without bending stress when the upper layer is connected to the first electrode layer or the second electrode layer, which layer is substantially mechanically bend according to the pre-bending of the upper layer. Herein, in particular, the bending may decrease when the applied electrical voltage difference increases, and may increases when the applied electrical voltage difference decreases.

According to a third embodiment example of the present disclosure, there is provided a wind turbine, which comprises a rotor blade according to the first embodiment example of the present disclosure and/or which is operated using the method according to the second embodiment example of the present disclosure.

### Brief description of the drawings

In the following, embodiment examples of the present disclosure are described in detail with reference to the following drawings.
**Fig. 1** shows a schematic side view of a wind turbine having rotor blades according to the first embodiment example of the present disclosure.
**Fig. 2** shows a perspective view of a rotor blade for a wind turbine, having an aerodynamic device, according to the first embodiment example of the present disclosure.
**Fig. 3** shows, in the left portion, a schematic perspective view of a conventional actuator having a dielectric electroactive polymer film in a relaxed, i.e. non-activated, state, and in the right portion, a schematic perspective view of a conventional actuator having a dielectric electroactive polymer film in an activated, deformed state.
**Fig. 4** shows a schematic perspective view of a bending actuator, having a dielectric electroactive polymer film, according to the first embodiment example of the present disclosure in a relaxed, i.e. non-activated, state, i.e. having assumed a first shape.
**Fig. 5** shows a schematic perspective view of the bending actuator of Fig. 4 in an activated, bended state, i.e. having assumed a second shape.
**Fig. 6** shows, in the lower portion, a schematic cross-sectional view of a bending actuator, having an ionic electroactive polymer film, according to the first embodiment example of the present disclosure, in a relaxed, i.e. non-activated, state, i.e. having assumed a first shape, and further shows, in the upper portion, a schematic cross-sectional view of the bending actuator of the upper portion in an activated, deformed state, i.e. having assumed a second shape.
**Fig. 7** shows a schematic perspective view of an embodiment of a bending actuator according to the first embodiment example of the present disclosure, which actuator is subdivided in its extension direction in a plurality of sectional bending actuators.
**Fig. 8** shows a schematic perspective view of an embodiment of a bending actuator according to the first embodiment example of the present disclosure invention, which actuator has a continuous upper layer extending in the extension direction and a plurality of partial bending actuators that are distributed along, and mutually spaced at a distance from each other in the extension direction.
**Fig. 9** shows a schematic cross-sectional view of an implementation of an aerodynamic device according to the first embodiment example of the present disclosure, which is arranged on the outer surface of the rotor blade.
**Fig. 10** shows a schematic cross-sectional view of another implementation of an aerodynamic device according to the first embodiment example of the present disclosure, which is arranged on the outer surface of the rotor blade.
**Fig. 11** shows a schematic cross-sectional view of an aerodynamic device according to the first embodiment example of the present disclosure, which is arranged in a groove, which is formed in the outer surface of the rotor blade.

Similar or like components in different figures are provided with the same reference numerals, or with reference numerals that differ only at the second decimal position. The figures are not necessarily drawn to scale, and are schematic.

### Detailed description of embodiments

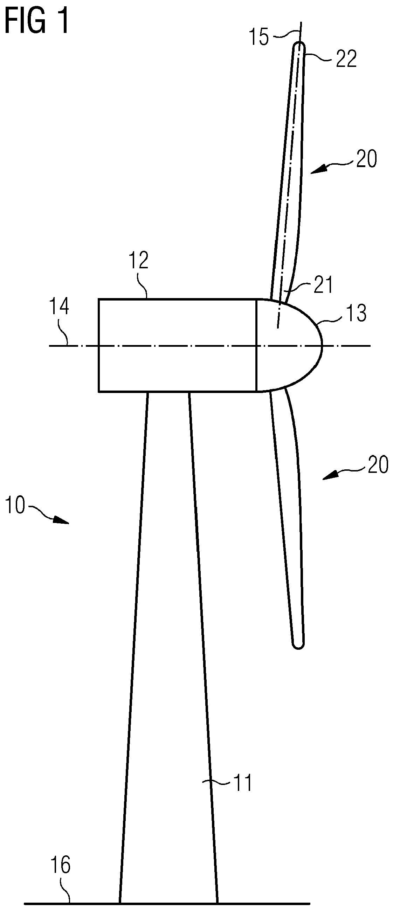

**Fig. 1** shows a schematic side view of a wind turbine 10 having rotor blades 20 according to the first embodiment example of the present disclosure.

The wind turbine 10 is for generating electricity, and comprises a tower 11, a nacelle 12, a generator (not shown), a rotor hub 13, and rotor blades 20. At the opposite end of the tower 11 there is mounted a nacelle 12. The tower 11 is mounted on the ground 16 by one end. The nacelle 12 is usually mounted rotatable with regard to the tower 11, which is referred to as comprising a yaw axis substantially perpendicular to the ground 16. The nacelle 12 usually accommodates the generator of the wind turbine and the gear box (if the wind turbine is a geared wind turbine). The hub 13 is rotatable about a substantially horizontal rotor axis 14. The hub 13 is often described as being a part of the rotor, wherein the rotor is capable to transfer the rotational energy to the generator.

The hub 13 is the part, at which the rotor blades 20 are mounted. Each rotor blade 20 is usually mounted pivotable to the hub 13. In other words, the rotor blades 20 can be pitched about a pitch axes 15, respectively. Pitching the rotor blades 20 may improve the control of the wind turbine 10 and in particular of the rotor blades by the possibility of modifying the direction, at which the airflow or wind is hitting the rotor blades 20. Each rotor blade 20 is mounted to the hub 13 at its root section 21. The root section 21 is opposed to a tip section 22 of the rotor blade. Note that in the example as shown in Figure 1, only two rotor blades 20 are depicted. However, most modern wind turbines 10 comprise three rotor blades 20.

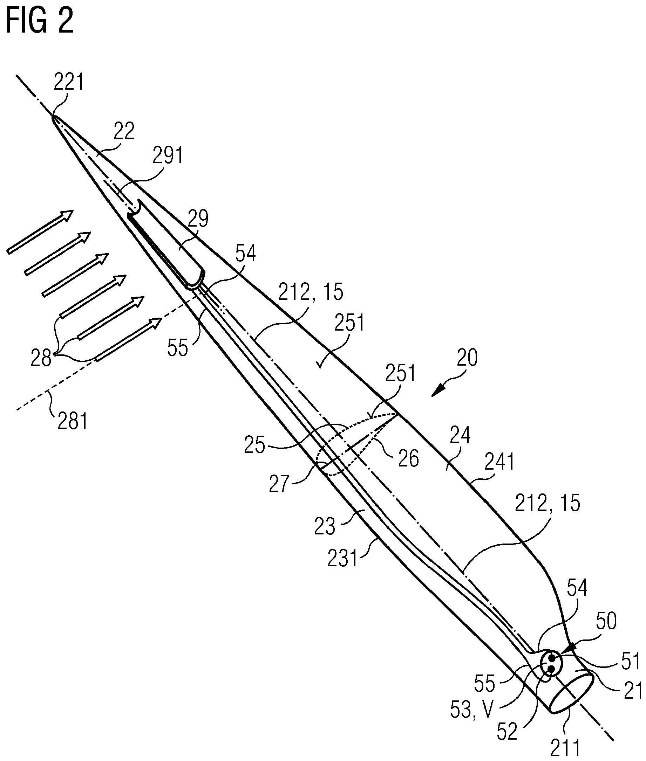

**Fig. 2** shows a perspective view of a rotor blade 20 for a wind turbine 10, having an aerodynamic device 29, according to the first embodiment example of the present disclosure.

The rotor blade 20 comprises a root section 21 with a root 211 and a tip section 22 with a tip 221. The rotor blade 20 furthermore comprises an airfoil section which is characterized in that it is able to generate lift and comprises a suction side 25 and a pressure side 26. The airfoil shape of the airfoil portion is symbolized by one airfoil profile which is shown as a dotted line in Figure 2 and which illustrates the cross-sectional shape of the rotor blade at this spanwise position. It is noted that the suction side 25 is divided or separated from the pressure side 26 by a chord line 27, which connects the leading edge 241 with the trailing edge 231 of the rotor blade 20. It is also noted that the area around the trailing edge 231 is commonly referred to as the trailing edge section 23 of the rotor blade 20. Likewise, the area around the leading edge 241 is commonly referred to as the leading edge section 24.

A feature which distinguishes the rotor blade 20 as illustrated in Figure 2 from a standard prior art rotor blade is the provision of the aerodynamic device 29 according to the first embodiment example of the present disclosure. The aerodynamic device 29 is arranged substantially along the length axis of the rotor blade, which is defined as the axis from the root 211 to the tip 221 of the rotor blade 20. In the example shown in Figure 2, the aerodynamic device 29 extends over more than ten percent, preferably over more than fifteen percent, more preferably over more than twenty percent, of the length of the rotor blade 20.

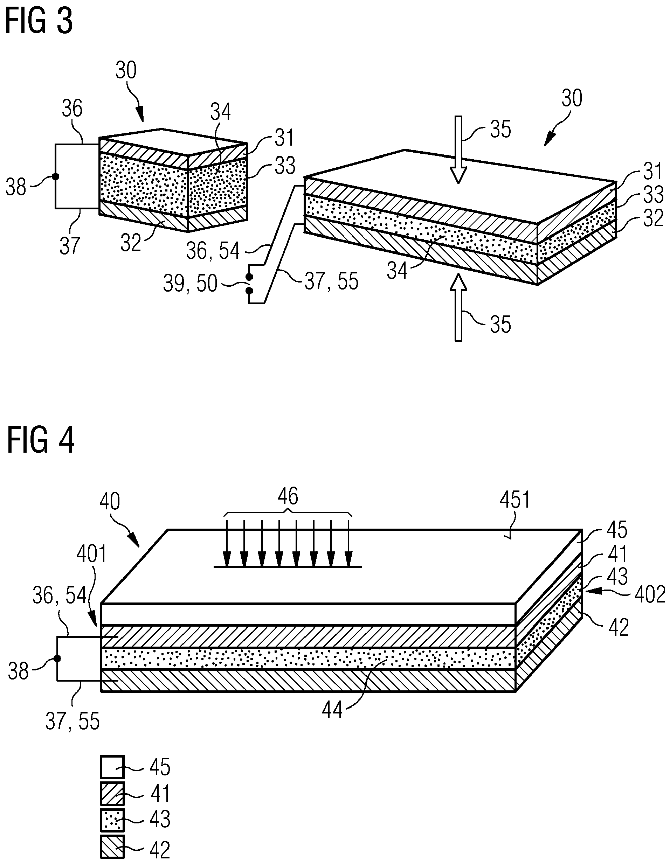

The aerodynamic device 29 in Figure 2 is movable by means of a bending actuator 40, 60, which will be shown and described in more detail below with respect to Figures 4, 5 and 6.

With reference to Fig. 2, it is to be understood that according to a first embodiment example of the present disclosure, there is provided a rotor blade 20 for a wind turbine 10, wherein the rotor blade 20 has a controllable aerodynamic device 29, which is arranged at a suction side 25 of the rotor blade 20 between a leading edge section 23 of the rotor blade 20 and a trailing edge section 24 of the rotor blade 20.

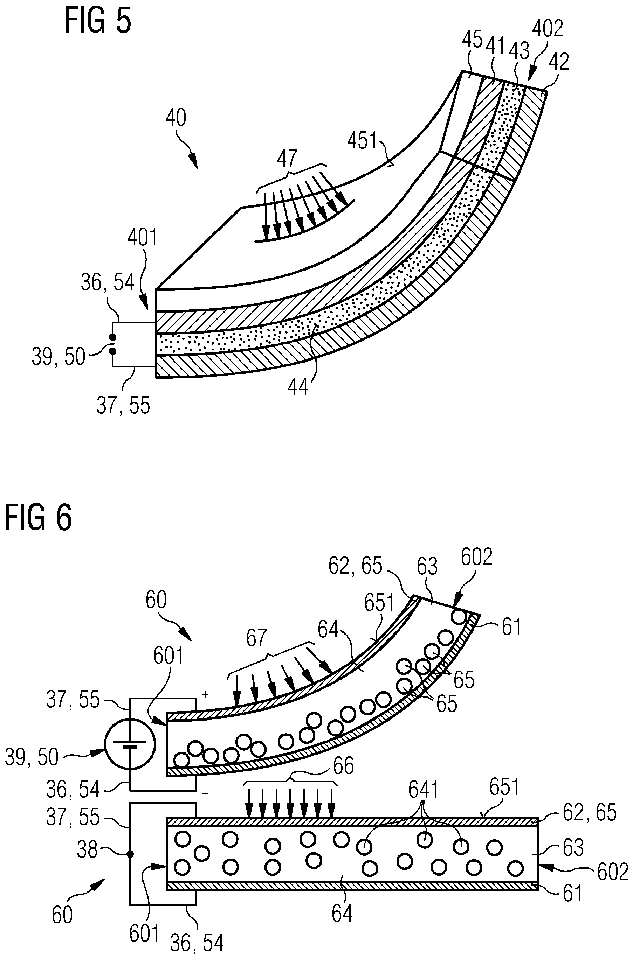

With reference to Figs. 4, 5 and 6 below, it will be understood that the aerodynamic device 29 has a bending actuator 40, 60, which comprises an electroactive polymer (EAP) film 43, 63, which is sandwiched between a first electrode layer 41, 61 and a second electrode layer 42, 62. The bending actuator 40, 60 is configured to assume a first bended shape that is between a first shape 46, 66 (refer to Fig. 4 and to Fig. 6 (upper portion)) and a second shape 47, 67 (refer to Fig. 5 and to Fig. 6 (lower portion)) of the bending actuator 40, 60 when an electrical voltage difference 49, 69 is applied to the first electrode layer 41, 42 and the second electrode layer 61, 62. The second shape 47, 67 involves a strongest bending of the bending actuator 40, 60 and an according strongest influence of an airflow 28 flowing from the leading edge section 23 of the rotor blade 20 to the trailing edge section 24 of the rotor blade 20. In contrast thereto, the first shape 46, 66 involves a weakest or substantially no bending of the bending actuator 40, 60 and an according weakest or substantially no influence of the airflow 28. In particular, the bending actuator 40, 60 is configured to vary its shape, typically continuously, from the first bended shape so as to assume a second bended shape between the first shape 46, 66 (shown in Fig. 4 and in Fig. 6 (upper portion)) and the second shape 47, 67 (shown in Fig. 5 and in Fig. 6 (lower portion)) in response to varying the electrical voltage difference 49, 69 applied to the first electrode layer 41, 42 and the second electrode layer 61, 62.

As mentioned already above, a typical characteristic property of an EAP is that it will undergo a large amount of deformation while sustaining large forces. EAPs can have a variety of different configurations, but are generally divided in two principle classes: electrostatic EAPs and ionic EAPs.

A configuration of a bending actuator 40 involving a dielectric EAP is shown in Figures 4 and 5, and is explained below. A configuration of a bending actuator 60 involving an ionic EAP is shown in Figure 6, and is explained further below.

Before explaining the configuration of a bending actuator 40 involving a dielectric EAP is shown in Figures 4 and 5, a typical behaviour of a dielectric EAP embodied as a dielectric elastomer under actuation by an applied external electric field is explained with reference to Fig. 3.

**Fig. 3** shows, in the left portion, a schematic perspective view of a conventional actuator 30 having a dielectric electroactive polymer film 33 in a relaxed, i.e. non-activated, state, and in the right portion, a schematic perspective view of the same actuator 30 having the dielectric electroactive polymer film 33 in an activated, deformed state.

The conventional actuator 30 comprises a film 33 made of a dielectric electroactive material 34, which may be chosen to be a dielectric elastomer material. The actuator further comprises a first electrode layer 31 and a second electrode layer 32, which are coated on opposite main surfaces of the dielectric elastomer film 33, so that the dielectric elastomer film 33 is sandwiched between the first and the second electrode layers 31 and 32. The first and the second electrode layers 31 and 32 are connected to an electric circuit, which comprises a first electric line 36 connected to the first electrode layer 31 and a second electric line 37 connected to the second electrode layer 32. As mentioned already, a dielectric electroactive polymer material 34 is a polymer material, in which the actuation is caused by electrostatic forces between two electrodes 31 and 32, which squeeze the polymer film 33, as shown in the right portion of Fig. 3.

In the actuator 30 shown in the left portion of Fig. 3, the first and the second electric lines 36 and 37 are connected to form a short circuit 38. Accordingly, no electric voltage difference is applied to the first and the second electrode layers 31 and 32, no electric field is formed inside the dielectric elastomer film 33, and the dielectric elastomer material 34 of the dielectric elastomer film 33 is in a relaxed state.

In the actuator 30 shown in the right portion of Fig. 3, the first and the second electric lines 36 and 37 are connected to a electrical voltage supply 39, which provides an electrical voltage difference to the first and the second electric lines 36 and 37 and hence to the first and the second electrode layers 31 and 32. Consequent to electric voltage difference applied to the first and the second electrode layers 31 and 32, an electric field is formed inside the dielectric elastomer film 33, and an electrostatic force is created between two electrodes 31 and 32, which provides a mechanical compression 35 to, and squeezes, the dielectric elastomer film 33. The squeezed dielectric elastomer material 34 of the dielectric elastomer film 33 is in an activated state, in which the dielectric elastomer film 33 is contracted in the thickness direction according to the mechanical compression 35 and is expanded in the film plane directions. When the electrical voltage difference, and hence the electric field applied between the two electrodes 31 and 32 is released, notably by establishing the short circuit 38 between the first and the second electric lines 36 and 37, the dielectric polymer film 33 moves back to its relaxed state shown in the left portion of Fig. 3.

**Fig. 4** shows a schematic perspective view of a bending actuator 40, having a dielectric electroactive polymer film 43, according to the first embodiment example of the present disclosure in a relaxed, i.e. non-activated, state, in which the dielectric electroactive polymer film 43 has assumed a first shape 46. **Fig. 5** shows a schematic perspective view of the bending actuator 40 of Fig. 4 in an activated, bended state, in which the dielectric electroactive polymer film 43 has assumed a second shape 47.

As in the actuator 30 shown in Fig. 3, the bending actuator 40 shown in Fig. 4 comprises a film 43 made of dielectric electroactive polymer material 44, which is sandwiched between a first electrode layer 41 coated on a first (in Fig. 4 upper) main surface of the film 43 and a second electrode layer 42 coated on a second (in Fig. 4 lower) main surface of the film 43. In addition, and this brings about a difference in the behaviour under activation of the dielectric electroactive polymer film 43, the bending actuator 40 shown in Fig. 4 further comprises an upper layer 45, which is arranged on an upper surface of the first electrode layer 41, and which is two-dimensionally connected, for example laminated or glued, onto the first electrode layer 41.

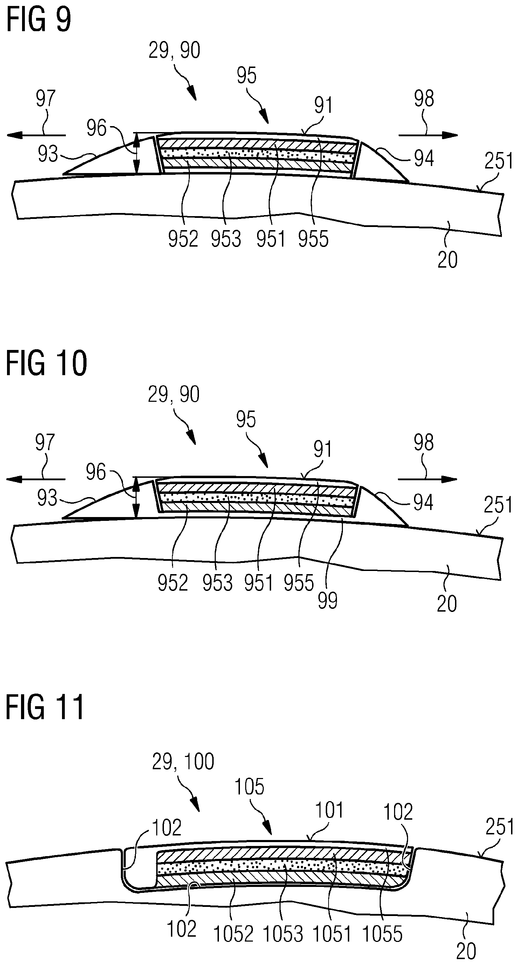

When the bending actuator 40 is incorporated in a rotor blade 20, for example as shown in Fig. 9 or 10, the upper layer 45 is arranged at a side that is exposed to the airflow 28. The upper layer 45 is made of a material, which is electrically inactive and elastic, and which is stiffer than the DEAP material 44 of the film 43. The upper layer 45 is mechanically substantially flat and without bending stress when the upper layer 45 is connected to the first electrode layer 41 or the second electrode layer 42, which layers 41, 42 are substantially mechanically flat and without bending stress when no electrical voltage difference 39 is applied to the first and second electrode layers 41 and 42, i.e. when the first and second electrode layers 41 and 42 are short-circuited 38. Due to this configuration with the inactive, stiff upper layer 45 being two-dimensionally connected to the upper first electrode layer 41, a bending deformation of the actuator 40 is created when an electrical voltage difference 39 is applied to the first and the second electrode layers 41, 42. It is understood that the bending increases when the applied electrical voltage difference 39 increases. Accordingly, the second shape 47 (indicated by a swarm of arrows shown at 47 in Fig. 5) of the bending actuator 40 is bent more strongly and involves a stronger bending than the first shape 46 (indicated by a swarm of arrows shown at 46 in Fig. 4) of the bending actuator 40, which involves a weaker, in Fig. 4 substantially no, bending.

When the bending actuator 40 as shown in Fig. 4 is incorporated in an aerodynamic device 29 of a rotor blade 20, for example as shown in Fig. 2, the bending actuator 40 has a leading edge 401, which is at a side of the bending actuator 40 that faces towards the leading edge region 23 (see Fig. 2) of the rotor blade 20, and a trailing edge 402, which is at a side of the bending actuator 40 that faces towards the trailing edge region 24 (see Fig. 2) of the rotor blade 20.

The bending actuator 40 shown in Figs. 4 and 5 may be modified such that the state of the bending actuator 40 shown in Fig. 5 comprises the dielectric EAP film 43 in a relaxed, bended state, wherein no electrical voltage difference 39 is applied to the first and second electrode layers 41 and 42, and the state of the bending actuator 40 shown in Fig. 4 comprises the dielectric EAP film 43 in an activated, substantially unbended state, wherein an electrical voltage difference 39 is applied to the first and second electrode layers 41 and 42. This can be achieved by providing that the bending actuator 40 further comprises an upper layer 45 arranged at a side that is exposed to the airflow 28, wherein the upper layer 45 is made of a material that is electrically inactive, elastic, stiffer than the DEAP material 44, in particular the DE material, of the film 43, and mechanically pre-bend and without bending stress when the upper layer 45 is connected to the respective one of the first electrode layer 41 (as shown in Figs. 4 and 5) or the second electrode layer 42 (not shown). In this modified configuration of the bending actuator 40, the dielectric EAP film 43 and the first and second electrode layers 41 and 42 are mechanically bent according to the pre-bending of the upper layer 45 and without bending stress when no electrical voltage difference 39 is applied to the first and second electrode layers 41 and 42. Due to this configuration with the inactive, stiff upper layer 45 provided in the mechanically pre-bended state and being two-dimensionally connected to the upper first electrode layer 41, a flattening deformation of the actuator 40 is created when an electrical voltage difference 39 is applied to the first and the second electrode layers 41, 42. It is understood that in this modified bending actuator 40, the bending decreases when the applied electrical voltage difference 39 increases.

Fig. 6 shows, in the lower portion, a schematic cross-sectional view of a bending actuator 60, having an ionic electroactive polymer (EAP) film 63, according to the first embodiment example of the present disclosure in a relaxed, i.e. non-activated, state, i.e. having assumed a first shape 66, and further shows, in the upper portion, a schematic cross-sectional view of the bending actuator 60 of the upper portion, in which the ionic electroactive polymer (EAP) film 63 is in an activated, deformed state, wherein the actuator 60 has assumed a second shape 67.

As mentioned already above, in ionic EAP material 64, the actuation by an external electric field causes a displacement of ions 641 inside the polymer material 64, wherein typically the ions 641 gather at the main surface, where the oppositely charged electrode, for example the first electrode layer 61 being embodied as a cathode in the case of electropositive ions 641, is arranged. The gathering of the ions 641 and the associated electrostatic repulsion among the ions 641 causes the ionic EAP film 63 to bend, as is shown in the upper portion of Fig. 6.

It is understood that in the bending actuator 60 shown in Fig. 6, the bending increases when the applied electrical voltage difference 39 increases. Accordingly, the second shape 67 (indicated by a swarm of arrows shown at 67 in the upper portion of Fig. 6) of the bending actuator 60 is bent more strongly and involves a stronger bending than the first shape 66 (indicated by a swarm of arrows shown at 66 in the lower portion of Fig. 6) of the bending actuator 60, which involves a weaker, in the lower portion of Fig. 6 substantially no, bending. It is also understood that the bending increases when the applied electrical voltage difference 39 increases.

When the bending actuator 60 as shown in Fig. 6 is incorporated in an aerodynamic device 29 of a rotor blade 20, for example as shown in Fig. 2, the bending actuator 60 has a leading edge 601, which is at a side of the bending actuator 60 that faces towards the leading edge region 23 (see Fig. 2) of the rotor blade 20, and a trailing edge 602, which is at a side of the bending actuator 60 that faces towards the trailing edge region 24 (see Fig. 2) of the rotor blade 20.

The bending actuator 60 shown in Fig. 6 may be modified such that the state of the bending actuator 60 shown in the upper portion of Fig. 6 comprises the ionic EAP film 63 in a relaxed state, wherein no electrical voltage difference 39 is applied to the first and second electrode layers 61 and 62, and the state of the bending actuator 60 shown in the lower portion of Fig. 6 comprises the ionic EAP film 63 in an activated state, wherein an electrical voltage difference 39 is applied to the first and second electrode layers 61 and 62. This can be achieved by providing the ionic EAP film 63 in the relaxed state, i.e. without an electrical voltage difference applied, in a pre-bended shape as shown in the upper portion of Fig. 6, so that an activation by application of an electrical voltage difference deforms the film 63 from the relaxed, pre-bended state to the film 63 in an activated, less bended or virtually not bended shape as shown in the lower portion of Fig. 6. It is thus understood that in the so-modified bending actuator 60, the bending decreases when the applied electrical voltage difference 39 increases.

As is reflected on the one hand in Figs 4 and 5, and on the other hand in Fig. 6, EAPs may have a different configurations, but are generally divided in two principle classes: electrostatic EAPs and ionic EAPs.

Dielectric EAPs are polymer materials 44 (as in Figs. 4 and 5), in which the actuation is caused by electrostatic forces between two electrodes, which squeeze the polymer material 44. As is known to a skilled person, dielectric electroactive polymers are capable of very high strains and are fundamentally a capacitor that changes its capacitance when a voltage difference is applied, thereby causing the polymer to compress in thickness and expand in area due to the electric field (as shown in Fig. 3 and in Figs. 4 and 5). This type of EAP typically requires a large actuation voltage to produce a high electric field (hundreds of thousands of volts), but very low electrical power consumption. Dielectric EAPs require no power to keep the actuator at a given position. In contrast to ionic EAPs (see hereinafter), dielectric EAPs work in dry conditions. Accordingly, DEAP-based actuators, i.e. the assembly of a DEAP film sandwiched between a pair of electrode layers, and optionally formed in a particular mechanical configuration (refer to Figs. 4 to 10), need to be wrapped in, or enclosingly sealed by, an insulation layer for holding off humidity and/or water. Dielectric EAPs are very fast in responding, exhibit relatively large activation stresses and can hold the induced displacement under DC activation. Examples of EAP are electrorestrictive polymers and dielectric elastomers.

In ionic EAPs, the actuation by an external electric field causes a displacement of ions 641 inside the polymer material 64 (as in Fig. 6), wherein typically the ions 641 gather at the main surface where the oppositely charged electrode, for example the cathode (first electrode layer 61 in Fig. 6) in the case of electropositive ions 641, is arranged, which causes the polymer material 64 or film 63 to bend. Only a few volts are needed for actuation, but the ionic flow implies a higher electrical power needed for actuation, and energy is needed to keep the actuator at a given position. Since the ions are diffused inside an electrolyte, they need to maintain their wetness during all times. They are mostly used as bending actuators with strong bending capabilities, but have a rather slow response speed. Examples of ionic EAPs are conductive polymers, ionic polymer-metal composites (IPMCs), and responsive gels. Yet another example is a Bucky gel actuator, which is a polymer-supported layer of polyelectrolyte material consisting of an ionic liquid sandwiched between two electrode layers consisting of gel of ionic liquid containing single-wall carbon nanotubes. The name comes from the similarity of the gel to the paper that can be made by filtering carbon nanotubes, the so-called buckypaper. The production of stable material configurations may be difficult.

While in the Figures 3 to 6 the electrical voltage supply system comprising the electrical voltage supply device 39, the first electric line 36 connected to the respective first electrode layer 31, 41, 61 and the second electric line 37 connected to the respective second electrode layer 32, 42, 62, the electrical voltage supply system of the aerodynamic device 29 is furthermore also disclosed in Fig. 2. As shown in Fig. 2, the electrical voltage supply system comprises an electrical voltage supply device 50, which comprises a first electrode 51 and a second electrode 52 and is configured to provide an electrical voltage difference 53 or V_{DC}. The electrical voltage supply system further comprises a first electric line 54 connected between the first electrode 51 of the electrical voltage supply device 50 (see Fig. 2) and the first electrode layer 41 in Fig. 4 and 61 in Fig. 6, and a second electric line 55 connected between the second electrode 52 of the electrical voltage supply device 50 (see Fig. 2) and the second electrode layer 42 in Fig. 4 and 62 in Fig. 6. The first and the second electric lines 54, 55 provide an electrical voltage, in particular an electrical voltage difference V (indicated at 53 in Fig. 2 and at 39 in Figures 4, 5 and 6), to the bending actuator 40, 60 of the aerodynamic device 29.

In the example shown in Figure 2, the electrical voltage supply device 50 is located in the rotor blade 20, in particular in the root section 21 of the rotor blade 20. However, a person skilled in the art is well aware that the electrical voltage supply device 50 could also be placed elsewhere in the wind turbine 10, such as for example in the hub 13 of the wind turbine 13 or in the nacelle 15 of the wind turbine 10.

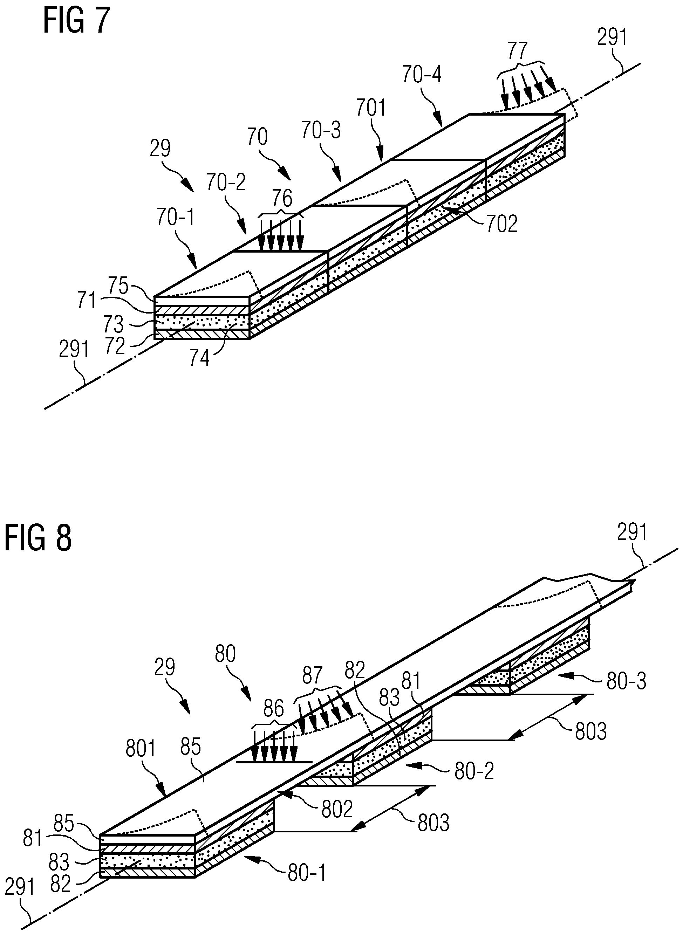

Fig. 7 shows a schematic perspective view of an embodiment of a bending actuator 70 of an aerodynamic device 29 according to the first embodiment example of the present disclosure, which actuator 70 is subdivided in its extension direction 291 in a plurality of sectional bending actuators 70-1, ... 70-4.

The aerodynamic device 29 shown in Fig. 7 extends longitudinally in an extension direction 291, which is substantially parallel to, or at an acute angle with, the rotor blade length axis 212, which extends from the root 211 of the rotor blade 20 to the tip 221 of the rotor blade 20 (see Fig. 2). The bending is substantially not in a plane, which comprises the extension direction 291. Rather, the bending is substantially most pronounced in a plane perpendicular to the extension direction 291, as the drawing plane of Fig. 7.

The aerodynamic device 29 shown in Fig. 7 is subdivided in the extension direction 291 in a plurality of sectional bending actuators 70-1, ..., 70-4, which are mutually neighbouring each other. As is shown in Fig. 7, each sectional bending actuator 70-1, ..., 70-4 comprises a sectional EAP film 73, which is sandwiched between a first sectional electrode layer 71 and a second sectional electrode layer 72. Each sectional bending actuator 70-1, ..., 70-4 shown in Fig. 7 is operatable autonomously.

The plurality of mutually adjoining sectional bending actuators 70-1, ...,70-4 shown in Fig. 7 may electrically, that is in particular in respect of the application of the voltage difference to the first and second sectional electrode layers 71, 72, be operatable parallel to each other. In an alternative implementation, the sectional bending actuators 70-1, ...,70-4 may be operatable serially with each other.

The sectional bending actuators 70-1, ..., 70-4 of the aerodynamic device 29 are shown in Fig. 7 in their first shape at 76, and are indicated in their second shape at 77 by a dotted line.

**Fig. 8** shows a schematic perspective view of an embodiment of a bending actuator 80 of an aerodynamic device 29 according to the first embodiment example of the present disclosure, wherein the bending actuator 80 has a continuous upper layer 85 extending in the extension direction 291 and a plurality of partial bending actuators 80-1, ... , 80-3, which are distributed along, and mutually spaced at a distance 803 from each other in the extension direction 291.

Like the aerodynamic device 29 shown in Fig. 7, the aerodynamic device 29 shown in Fig. 8 extends longitudinally in an extension direction 291, which is substantially parallel to, or at an acute angle with, the rotor blade length axis 212. The bending is substantially not in a plane comprising the extension direction 291. Rather, the bending is substantially most pronounced in a plane perpendicular to the extension direction 291.

The aerodynamic device 29 shown in Fig. 8 has a continuous upper layer 85, which extends continuously in the extension direction 291. The aerodynamic device 29 further comprises the plurality of partial bending actuators 80-1, ..., 80-3, which are distributed along the extension direction 291 and are mutually spaced at a distance 803 from each other in the extension direction 291. Each partial bending actuator 80-1, ..., 80-3 is two-dimensionally fixed to partial portion of an underside of the upper layer 85. Each partial bending actuator 80-1, ..., 80-3 comprises a partial EAP film 83, which is sandwiched between a first partial electrode layer 81 and a second partial electrode layer 82. Each partial bending actuator 80-1, ..., 80-3 shown in Fig. 8 is operatable autonomously.

The plurality of mutually spaced partial bending actuators 80-1, ..., 80-3 shown in Fig. 8 are electrically, that is in particular in respect of the application of the voltage difference to the first and second sectional electrode layers 81, 82, operatable parallel to each other. In an alternative implementation, the partial bending actuators 80-1, ..., 80-3 may be operatable serially with each other.

The partial bending actuators 80-1, ..., 80-3 of the aerodynamic device 29 are shown in Fig. 8 in their first shape at 86, and are indicated in their second shape at 87 by a dotted line.

**Fig. 9** shows a schematic cross-sectional view of an implementation of an aerodynamic device 90 according to the first embodiment example of the present disclosure, which is arranged on the outer surface 251 of the rotor blade 20.

In particular, in the embodiment shown in Fig. 9, the aerodynamic device 29, 90 is arranged on an outer surface 251 at the suction side 25 (see Fig. 2) of the rotor blade 20.

The aerodynamic device 29, 90 shown in Fig. 9 comprises a first transition element 93, a bending actuator 95, and a second transition element 94, wherein the bending actuator 93 is arranged between the first transition element 93 and the second transition element 94.

As in the embodiments shown in Figures 7 and 8, the bending actuator 95 comprises a electroactive polymer film 953 that is sandwiched between a first and a second electrode layer 951 and 952, as well as an upper layer 955 arranged on the first electrode layer 951 and exposed to the airflow.

The first transition element 93 is arranged upstream of the bending actuator 95 with respect to the airflow direction 281, in particular at a side of the aerodynamic device 90 that faces in a direction 97 towards the leading edge section 23 (see Fig. 2) of the rotor blade 20. The first transition element 93 extends along a length of the aerodynamic device 29, 90 in the extension direction 291 of the aerodynamic device 29, 90, and tapers from a thickness 96 of the bending actuator 95 in the direction 97 towards the leading edge section 23 of the rotor blade 20 and/or perpendicular to the extension direction 291.

The second transition element 94 is arranged downstream of the bending actuator 95 with respect to the airflow direction 281, in particular at a side of the aerodynamic device 29, 90 that faces in a direction 98 towards the trailing edge section 24 (see Fig. 2) of the rotor blade 20. The second transition element 94 extends along a length of the aerodynamic device 29, 90 in the extension direction 291 of the aerodynamic device 29, 90, and tapers from a thickness 96 of the bending actuator 95 in a direction 98 towards the trailing edge section 24 (see Fig. 2) of the rotor blade 20 and/or perpendicular to the extension direction 291.

The first and the second transition elements 93, 94 are each two-dimensionally fixed to the outer surface 251 of the rotor blade 20. As is shown in Fig. 9, when the bending actuator 95 of the aerodynamic device 29, 90 assumes the first shape, an outer surface 91 of the bending actuator 95 is substantially flush with an outer surface 931 of the first transition element 93, and is further substantially flush with an outer surface 941 of the second transition element 94. The bending actuator 95 of the aerodynamic device 29, 90 of Fig. 9 is not shown in its second shape.

**Fig. 10** shows a schematic cross-sectional view of another implementation of an aerodynamic device according to the first embodiment example of the present disclosure, which is arranged on the outer surface of the rotor blade.

The other implementation shown in Fig. 10 is similar in many respects to the implementation shown in Fig. 9, though differs therefrom as follows.

In the implementation shown in Fig. 9, the first and the second transition elements 93, 94 are provided as separate elements. Alternatively, in the other implementation shown in Fig. 10, the first transition element 93 and the second transition element 94 are connected to each other via a floor element 99. The floor element 99 is arranged under the bending actuator 95. Herein, the first transition element 93, the second transition element 94, and the floor element 99 together form an integral profile device, which can be provided to the aerodynamic device 90 in a pre-fabricated state. The provision of the assembly of the first transition element 93, the second transition element 94, and the floor element 99 as an integral profile device simplifies the mounting of the aerodynamic device 90 shown in Fig. 10 to the outer surface of the rotor blade 20.

**Fig. 11** shows a schematic cross-sectional view of an aerodynamic device 100 according to the first embodiment example of the present disclosure, which is arranged in a groove 102, which is formed in the outer surface 251 of the rotor blade 20.

As in the embodiments shown in Figures 7 and 8, the aerodynamic device 100 comprises a bending actuator 105, which has a electroactive polymer film 1053 that is sandwiched between a first and a second electrode layer 1051 and 1052, as well as an upper layer 1055 arranged on the first electrode layer 1051 and exposed to the airflow.

The groove 102 extends longitudinally substantially parallel or at an acute angle to the rotor blade length axis 212. As is shown in Fig. 10, when the bending actuator 105 of the aerodynamic device 29, 100 assumes the first shape, an outer surface 101 of the bending actuator 105 is substantially flush with the outer surface 251 of the rotor blade 20. The bending actuator 105 of the aerodynamic device 29, 100 of Fig. 10 is not shown in its second shape.

Further to the embodiment examples of rotor blades disclosed hereinbefore with reference to the Figures 2 and 4 to 10, the present disclosure further conceives, according to the second embodiment example of the present disclosure, a method (not shown) of operating a wind turbine 10 according to the first embodiment example of the present disclosure and comprising a rotor blade 20 having a controllable aerodynamic device 29.

In the wind turbine 10 according to the first embodiment example of the present disclosure, each controllable aerodynamic device 29 is arranged at a suction side 25 of the rotor blade 20 between a leading edge section 23 of the rotor blade 20 and a trailing edge section 24 of the rotor blade 20. The aerodynamic device 29 has a bending actuator 40, 60, which comprises an electroactive polymer, EAP, film 43, 63, which is sandwiched between a first electrode layer 41, 61 and a second electrode layer 42, 62.

The method according to the second embodiment example of the present disclosure comprises a step of applying an electrical voltage difference 49, 69 to the first electrode layer 41, 61 and the second electrode layer 61, 62, so that the bending actuator 40, 60 assumes a first bended shape between a first shape 46, 66 (see Figs. 4 and 6 (upper portion)) and a second shape 47, 67 (see Figs. 5 and 6 (lower portion)) of the bending actuator 40, 60. The second shape 47, 67 involves a stronger bending of the bending actuator 40, 60 and an according stronger influence of an airflow 28 (see Fig. 2) flowing from a leading edge section 23 of the rotor blade 20 to a trailing edge section 24 of the rotor blade 20, while the first shape 46, 66 involves a weaker or substantially no bending of the bending actuator 40, 60 and an according weaker or substantially no influence of the air flow 28.

The method further may further comprise a step varying the electrical voltage difference 49, 69 applied to the first electrode layers 41, 61 and the second electrode layers 42, 62, so that the shape of the bending actuator changes its shape, in particular continuously, from the first bended shape and assumes a second bended shape between the first shape 46, 66 and the second shape 47, 67.

In this specification, example embodiments have been presented in terms of a selected set of details. However, a person of ordinary skill in the art would understand that many other example embodiments may be practiced which include a different selected set of these details. It is intended that the following claims cover all possible example embodiments.

Supplementary, it is to be noted that "having" or "comprising" does not exclude other elements or steps, and that "a" or "an" does not exclude a plurality. In addition, it is to be noted that features or steps, which have been described above with reference to one of the above embodiment examples, may also be used in combination with other features or steps of other embodiment examples that have been described above. Reference numerals in the claims are not to be construed as limitations.

## Claims

1. A rotor blade (20) for a wind turbine (10), wherein the rotor blade (20) has:
a controllable aerodynamic device (29) arranged at a suction side (25) of the rotor blade (20) between a leading edge section (23) of the rotor blade (20) and a trailing edge section (24) of the rotor blade (20),
wherein the aerodynamic device (29) has a bending actuator (40, 60), which comprises an electroactive polymer, EAP, film (43, 63), which is sandwiched between a first electrode layer (41, 61) and a second electrode layer (42, 62),
wherein the bending actuator (40, 60) is configured to assume a first bended shape that is between a first shape (46, 66) and a second shape (47, 67) of the bending actuator (40, 60) when an electrical voltage difference (49, 69) is applied to the first and the second electrode layers (41, 42; 61, 62),
wherein the second shape (47, 67) involves a strongest bending of the bending actuator (40, 60) and an according strongest influence of an airflow (28) flowing from the leading edge section (23) of the rotor blade (20) to the trailing edge section (24) of the rotor blade (20) and wherein the first shape (46, 66) involves a weakest or substantially no bending of the bending actuator (40, 60) and an according weakest or substantially no influence of the airflow (28).

2. The rotor blade (20) according to claim 1, further having one or more of the following features:
i) the bending actuator (40, 60) is configured to vary its shape, in particular continuously, from the first bended shape so as to assume a second bended shape between the first shape (46, 66) and the second shape (47, 67) in response to varying the electrical voltage difference (49, 69) applied to the first and the second electrode layers (41, 42; 61, 62);
ii) the bending actuator (40, 60) has a leading edge that is closer to the leading edge (401, 601) section (23) of the rotor blade (20) and a trailing edge (402, 602) that is further away from the leading edge section (23) of the rotor blade (20) than the leading edge of the actuator,
wherein the leading edge (401, 601) is substantially fixedly arranged with respect to an outer surface (251) of the rotor blade (20) and the trailing edge (402, 602) is movable and increases its lifting off with respect to the outer surface (251) of the rotor blade (20) when the bending of the actuator (40, 60) increases;
iii) the bending actuator (40, 60) has an upper surface (451, 651) that is exposed to the airflow (28), which upper surface (451, 651) becomes more concave when the bending becomes stronger.

3. The rotor blade (20) according to any one of the claims 1 or 2, wherein the EAP film (63) of the bending actuator (40, 60) is an ionic electroactive polymer, IEAP, film (63) that is configured to change a bending deformation when an electrical voltage difference (39) applied to the first and the second electrode layers (61, 62) is varied, and
wherein the bending actuator (40, 60) further has one of the following features:
a) the bending increases when the applied electrical voltage difference (39) increases;
b) the bending decreases when the applied electrical voltage difference (39) increases.

4. The rotor blade according to any one of the claims 1 or 2, wherein the EAP film (43) is a dielectric electroactive polymer, DEAP, film (43), in particular a dielectric elastomer, DE, film (43), that is sandwiched between a first electrode layer (41) and a second electrode layer (42), and
wherein the bending actuator (40, 60) further has one of the following features:
a) the bending actuator (40) further comprises an upper layer (45) arranged at a side that is exposed to the airflow (28), wherein the upper layer (45) is made of a material that is electrically inactive, elastic, stiffer than the DEAP material (44), in particular the DE material, of the film (43), and mechanically substantially flat and without bending stress when the upper layer (45) is connected to the first electrode layer (41) or the second electrode layer (42), which layers (41, 42) are substantially mechanically flat and without bending stress when no electrical voltage difference (39) is applied to the first and second electrode layers (41, 42),
in particular wherein the bending increases when the applied electrical voltage difference (39) increases and decreases when the applied electrical voltage difference (39) decreases;
b) the bending actuator (40) further comprises an upper layer (45) arranged at a side that is exposed to the airflow (28), wherein the upper layer (45) is made of a material that is electrically inactive, elastic, stiffer than the DEAP material (44), in particular the DE material, of the film (43), and mechanically pre-bend and without bending stress when the upper layer (45) is connected to the first electrode layer (41) or the second electrode layer (42), wherein the film (43) and the first and second electrode layers (41, 42) are mechanically bent according to the pre-bending of the upper layer (45) and without bending stress when no electrical voltage difference (39) is applied to the first and second electrode layers (41, 42),
in particular wherein the bending decreases when the applied electrical voltage difference (39) increases and increases when the applied electrical voltage difference (39) decreases.

5. The rotor blade (20) according to any one of the claims 1 to 4, wherein the rotor blade (20) extends longitudinally along a rotor blade length axis (212) from a root (211) of the rotor blade (20) to a tip (221) of the rotor blade (20),
wherein the aerodynamic device (29) extends longitudinally in an extension direction (291), which is substantially parallel to, or at an acute angle with, the rotor blade length axis (212), and
wherein the bending is substantially not in a plane comprising the extension direction (291), and
wherein the bending rather is substantially most pronounced in a plane perpendicular to the extension direction (291) .

6. The rotor blade (20) according to claim 5, wherein the aerodynamic device (29) is subdivided in the extension direction (291) in a plurality of sectional bending actuators (70-1, ..., 70-4), which are mutually neighbouring each other,
wherein each sectional bending actuator (70-1, ..., 70-4) comprises a sectional EAP film (73) that is sandwiched between a first sectional electrode layer (71) and a second sectional electrode layer (72);
in particular wherein each sectional bending actuator (70-1, ..., 70-4) is operatable autonomously.

7. The rotor blade (20) according to claim 5, wherein the aerodynamic device (29) has a continuous upper layer (85) that extends continuously in the extension direction (291), and a plurality of partial bending actuators (80-1, ..., 80-3) that are distributed along the extension direction (291) and are mutually spaced at a distance (803) from each other in the extension direction (291),
wherein each partial bending actuator (80-1, ..., 80-3) is two-dimensionally fixed to partial portion of an underside of the upper layer (85),
wherein each partial bending actuator (80-1, ..., 80-3) comprises a partial EAP film (83) that is sandwiched between a first partial electrode layer (81) and a second partial electrode layer (82);
in particular wherein each partial bending actuator (80-1, ..., 80-3) is operatable autonomously.

8. The rotor blade (20) according to claim 6 or 7, having one of the following features:
i) the plurality of mutually adjoining sectional bending actuators (70-1, ...,70-4) according to claim 6 or the plurality of mutually spaced partial bending actuators (80-1, ..., 80-3) according to claim 7 are electrically, that is in particular in respect of the application of the voltage difference to the first and second sectional electrode layers (71, 72) according to claim 6 or to the first and second partial electrode layers (81, 82) according to claim 7, operatable parallel to each other;
ii) the plurality of mutually adjoining sectional bending actuators (70-1, ...,70-4) according to claim 6 or the plurality of mutually spaced partial bending actuators (80-1, ..., 80-3) according to claim 7 are electrically, that is in particular in respect of the application of the voltage difference to the first and second sectional electrode layers (71, 72) according to claim 6 or to the first and second partial electrode layers (81, 82) according to claim 7, operatable serially with each other.

9. The rotor blade (20) according to any one of the claims 1 to 8, wherein the aerodynamic device (29) comprises an electrical voltage supply device (50) configured to provide an electrical voltage that is used to provide the electrical voltage difference (49, 69; 53) applied to the first and the second electrode layers (41, 42; 61, 62), in particular to the first and the second sectional electrode layers (71, 72) according to claim 7 or to the first and the second partial electrode layers (81, 82) according to claim 8, and wherein the aerodynamic device (29) further comprises one of the following features:
i) the electrical voltage supply device (50) is arranged within the rotor blade (20), in particular in a root section (21) of the rotor blade (20);
ii) the electrical voltage supply device (50) is arranged outside of the rotor blade (20) and elsewhere within the wind turbine (10), for example in a rotor hub (13) of the wind turbine (10) or in a nacelle (12) of the wind turbine (10) .

10. The rotor blade (20) according to any one of the claims 1 to 9, wherein the aerodynamic device (29, 90) is arranged on an outer surface (251) at the suction side (25) of the rotor blade (20).

11. The rotor blade (20) according to claim 10, wherein the aerodynamic device (29, 90) comprises a first transition element (93), which
- is arranged upstream of the bending actuator (95) with respect to the airflow direction (281), in particular at a side of the aerodynamic device (29, 90) that faces in a direction (97) towards the leading edge section (23) of the rotor blade (20),
- extends along a length of the aerodynamic device (29, 90) in the extension direction (291) of the aerodynamic device (29, 90), and
- tapers from a thickness (96) of the bending actuator (95) in the direction (97) towards the leading edge section (23) of the rotor blade (20) and/or perpendicular to the extension direction (291) away from the bending actuator (95);
wherein the aerodynamic device (29, 90) comprises a second transition element (94), which
- is arranged downstream of the bending actuator (95) with respect to the airflow direction (281), in particular at a side of the aerodynamic device (29, 90) that faces in a direction (98) towards the trailing edge section (24) of the rotor blade (20),
- extends along a length of the aerodynamic device (29, 90) in the extension direction (291) of the aerodynamic device (29, 90), and
- tapers from a thickness (96) of the bending actuator (95) in a direction (98) towards the trailing edge section (24) of the rotor blade (20) and/or perpendicular to the extension direction (291) away from the bending actuator (95);
in particular, wherein, when the bending actuator (95) of the aerodynamic device (29, 90) assumes the first shape, an outer surface (91) of the bending actuator (95) is substantially flush with an outer surface (931) of the first transition element (93) and substantially flush with an outer surface (941) of the second transition element (94);
in particular, wherein the aerodynamic device (29, 90) further has at least one of the following features:
i) the first and the second transition elements (93, 94) are each two-dimensionally fixed to the outer surface (251) of the rotor blade (20);
ii) the first transition element (93) and the second transition element (94) are connected to each other via a floor element (99), which is arrangeable under the bending actuator (95), in particular wherein the first transition element (93), the second transition element (94), and the floor element (99) together form a profile device, which is provided to the aerodynamic device (29, 90) in a pre-fabricated state.

12. The rotor blade (20) according to any one of the claims 1 to 9, wherein the aerodynamic device (29, 100) is arranged in a groove (102), which is formed in an outer surface (251) at the suction side (25) of the rotor blade (20), and which extends longitudinally substantially parallel or at an acute angle to a rotor blade length axis (212);
in particular wherein, when the bending actuator (105) of the aerodynamic device (29, 100) assumes the first shape, an outer surface (101) of the bending actuator (105) is substantially flush with the outer surface (251) of the rotor blade (20).

13. A method of operating a wind turbine (10), wherein the wind turbine (10) comprises a rotor blade (20) having a controllable aerodynamic device (29) arranged at a suction side (25) of the rotor blade (20) between a leading edge section (23) of the rotor blade (20) and a trailing edge section (24) of the rotor blade (20), wherein the aerodynamic device (29) has a bending actuator (40, 60), which comprises an electroactive polymer, EAP, film (43, 63), which is sandwiched between a first electrode layer (41, 61) and a second electrode layer (42, 62),
wherein the method has:
applying an electrical voltage difference (49, 69) to the first and the second electrode layers (41, 42; 61, 62) so that the bending actuator (40, 60) assumes a first bended shape between a first shape (46, 66) and a second shape (47, 67) of the bending actuator (40, 60);
wherein the second shape (47, 67) involves a strongest bending of the bending actuator (40, 60) and an according strongest influence of an airflow (28) flowing from a leading edge section (23) of the rotor blade (20) to a trailing edge section (24) of the rotor blade (20), and wherein the first shape (46, 66) involves a weakest or substantially no bending of the bending actuator (40, 60) and an according weakest or substantially no influence of the air flow (28).

14. The method according to claim 13, further having one of the following features:
i) the method further has varying the electrical voltage difference (49, 69) applied to the first and the second electrode layers (41, 42; 61, 62), so that the shape of the bending actuator changes its shape, in particular continuously, from the first bended shape so as to assume a second bended shape between the first shape (46, 66) and the second shape (47, 67),
ii) the EAP film (63) of the bending actuator (40, 60) is an ionic electroactive polymer, IEAP, film (63) that is configured to create a bending deformation when the electrical voltage difference (69) is applied to the first and the second electrode layers (61, 62),
wherein the bending actuator (40, 60) further has one of the following features:
a) the bending increases when the applied electrical voltage difference (49) increases,
b) the bending decreases when the applied electrical voltage difference (49) increases;
iii) the EAP film (43) is a dielectric electroactive polymer, DEAP, film (43), in particular a dielectric elastomer, DE, film (43), that is sandwiched between a first electrode layer (41) and a second electrode layer (42),
wherein the bending actuator (40, 60) further has one of the following features:
a) the bending actuator (40) further comprises an upper layer (45) arranged at a side that is exposed to the airflow (28), wherein the upper layer (45) is made of a material that is electrically inactive, elastic, stiffer than the DEAP material (44), in particular the DE material, of the film (43), and mechanically substantially flat and without bending stress when the upper layer (45) is connected to the first electrode layer (41) or the second electrode layer (42), which layer (41, 42) is substantially mechanically flat and without bending stress,
in particular wherein the bending increases when the applied electrical voltage difference (49) increases and decreases when the applied electrical voltage difference (49) decreases;
b) the bending actuator (40) further comprises an upper layer (45) arranged at a side that is exposed to the airflow (28), wherein the upper layer (45) is made of a material that is electrically inactive, elastic, stiffer than the DEAP material (44), in particular the DE material, of the film (43), and mechanically pre-bend and without bending stress when the upper layer (45) is connected to the first electrode layer (41) or the second electrode layer (42), which layer (41, 42) is substantially mechanically bend according to the pre-bending of the upper layer (45),
in particular wherein the bending decreases when the applied electrical voltage difference (49) increases and increases when the applied electrical voltage difference (49) decreases.

15. A wind turbine (10), which has a rotor blade (20) according to any one of the claims 1 to 13, or which is operated according to the method according to claim 14.
